# EUROPEAN PATENT SPECIFICATION

(11) **EP 2 801 041 B1**
(45) Date of publication and mention of the grant of the patent: **11.12.2019**
(21) Application number: 12864176.8
(22) Date of filing: 31.10.2012
(51) Int. Cl.: G06F 17/27, G06F 17/20

(54) **SYSTEM AND METHOD FOR PROVIDING KEYWORD INFORMATION**
SYSTEM UND VERFAHREN ZUR BEREITSTELLUNG VON STICHWORTINFORMATIONEN
SYSTÈME ET PROCÉDÉ POUR FOURNIR DES INFORMATIONS DE MOTS CLÉS

(30) Priority: 03.01.2012 KR 20120000651
(43) Date of publication of application: 12.11.2014
(73) Proprietor: Samsung Electronics Co., Ltd., Suwon-si, Gyeonggi-do 443-742 (KR)
(72) Inventor: JUNG, Jong-woo, Hwaseong-si Gyeonggi-do 445-724 (KR); KIM, Chang-won, Asan-si Chungcheongnam-do 336-750 (KR); RHO, Yeon-hee, Seoul 138-796 (KR); WOO, Joo-kyung, Yongin-si Gyeonggi-do 448-150 (KR); LEE, Jae-young, Hwaseong-si Gyeonggi-do 445-792 (KR); LIM, Eun-young, Seoul 137-856 (KR)
(74) Representative: HGF Limited
(86) International application number: PCT/KR2012/009007
(87) International publication number: WO 2013/103187

(56) References cited:
- KR-A- 20060 017 300
- KR-A- 20080 028 031
- KR-A- 20090 062 371
- KR-A- 20090 111 734
- US-A1- 2007 055 926
- US-A1- 2011 087 955
- US-B1- 6 961 722

## Description

### Technical Field

The present invention relates generally to a system and method for providing keyword information, and more particularly, to a system and method for providing information regarding keywords included in content.

### Background Art

Due to the popularity of the Internet, users are able to view content such as Web documents using Web browsers at any time. Content on the Internet may be posted on bulletin board sites, newspaper sites, magazine sites, etc. in various ways, and these sites are utilized to obtain various types of information.

Although keyword information, which corresponds to keywords included in such Internet content, may be provided to users, it is difficult to effectively manage and provide keyword information corresponding to keywords selected by users. US-2011/087955-A1 discloses computer-aided methods and systems for e-books. US-6961722-B1 discloses an automated electronic dictionary.

US-2007/055926-A1 discloses systems and methods for collaboratively annotating electronic documents.

### Disclosure of Invention

### Solution to Problem

Accordingly, the present invention has been made to address at least the above problems and/or disadvantages and to provide at least the advantages described below.

The invention is defined in the appended claims. All following occurrences of the word "embodiment(s)", if referring to feature combinations different from those defined by the independent claims, refer to examples which were originally filed but which do not represent embodiments of the presently claimed invention; these examples are still shown for illustrative purposes only.

Embodiments of the present invention provide a system and method for providing keyword information capable of integrating and managing keywords received from a plurality of devices.

An aspect of the present invention also provides a system and method for providing keyword information capable of repeatedly providing information regarding keywords selected by a user from content with respect to various types of content available to the user.

An aspect of the present invention also provides a system and method for providing keyword information regarding content by classifying the keyword information with respect to devices, users, and applications.

### Brief Description of Drawings

The above and other features and advantages of the present invention will become more apparent by describing in detail embodiments thereof with reference to the attached drawings in which:
FIG. 1 is an outline diagram illustrating a system for providing keyword information, according to an embodiment of the present invention;
FIG. 2 is a detailed block diagram illustrating a server according to an embodiment of the present invention;
FIG. 3 is a detailed block diagram illustrating a device according to an embodiment of the present invention;
FIG. 4 is a keyword information table according to an embodiment of the present invention;
FIG. 5 is a table of keyword information classified with respect to users and content and stored according to an embodiment of the present invention;
FIG. 6 is a table of keyword information classified with respect to users and applications and stored according to an embodiment of the present invention;
FIG. 7 is a block flow diagram illustrating a method of providing keyword information, according to an embodiment of the present invention;
FIGs. 8A through 8C are diagrams illustrating a device that selects a keyword and acquires keyword information regarding the selected keyword according to an embodiment of the present invention; and
FIG. 9 is a diagram illustrating a device that displays keyword information received from a server according to an embodiment of the present invention.

### Best Mode for Carrying out the Invention

In accordance with a first aspect of the present invention, there is provided a server according to claim 1.

In accordance with a second aspect of the present invention, there is provided a device according to claim 12.

In accordance with a third aspect of the present invention, there is provided a method according to claim 13.

In accordance with a fourth aspect of the present application, there is provided a method according to claim 14.

### Mode for the Invention

Embodiments of the present invention are described as follows with reference to the accompanying drawings. In the drawings, the same or similar elements may be denoted by the same reference numerals even though they are depicted in different drawings. In the following description, well-known functions or constructions are not described in detail since they would obscure the invention in unnecessary detail.

Throughout this specification and the claims that follow, when an element is referred to as "coupled" to another element, such a coupling includes cases where the element may be directly coupled to the other element or electrically coupled to the other element through a third element. Expressions such as "at least one of," when preceding a list of elements, modify the entire list of elements and do not modify the individual elements of the list.

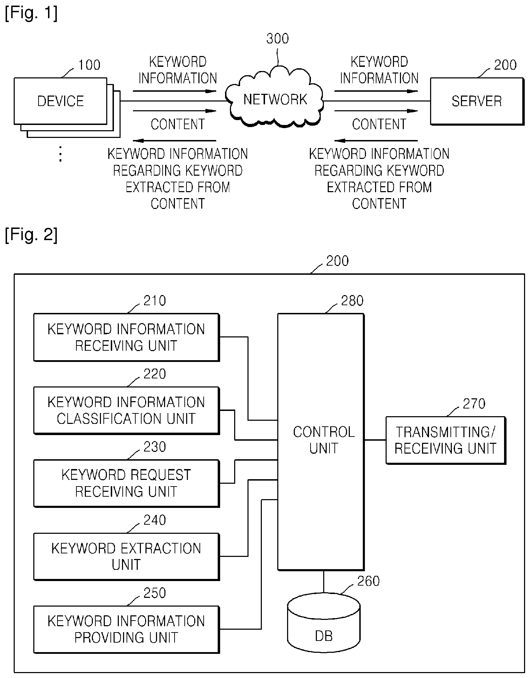

FIG. 1 is diagram illustrating a system for providing keyword information, according to an embodiment of the present invention.

Referring to FIG. 1, the system for providing keyword information according to an embodiment the present embodiment includes a device 100, a server 200, and a network 300. The device 100 selects keywords included in content displayed thereon, collects keyword information regarding the selected keywords, and provides the server 200 with the collected keyword information. The content may include texts and images, for example, texts and images included in e-books, news content, and board messages. The keyword information, which is information for explaining keywords, includes information such as information regarding meanings of keywords and characteristics thereof. The keyword information may include texts and images.

The server 200 receives content from the device 100, extracts keywords from the received content based on a previously set standard, and provides the device 100 with the keyword information corresponding to the extracted keywords. In particular, upon receiving the extracted keywords, the server 200 classifies and stores the keyword information received from the device 100, selects some of the stored keyword information in response to keyword information requests of the device 100, and provides the device 100 with the selected keyword information.

The device 100 is a terminal for displaying the content and information regarding keywords included in the content. The device 100 may be any of various types of terminals connectible to the server 200 over the network 300.

The network 300 may be implemented as a wired network such as a Local Area Network (LAN), a Wide Area Network (WAN), a Value Added Network (VAN), etc. or a wireless network such as a mobile radio communication network or a satellites communication network, etc. The network 300 is a data communication network including wired Internet, wireless Internet, and a mobile wireless communication network in a comprehensive way so that the device 100 and the server 200 can communicate each other over the network 300.

The server 200 according to an embodiment of the present invention is described as follows with reference to FIG. 2.

FIG. 2 is a detailed block diagram illustrating a server according to an embodiment of the present invention.

Referring to FIG. 2, the server 200 according to an embodiment of the present invention includes a keyword information receiving unit 210, a keyword information classification unit 220, a keyword request receiving unit 230, a keyword extraction unit 240, a keyword information providing unit 250, a DataBase (DB) 260, a transmitting/ receiving unit 270, and a control unit 280.

The keyword information receiving unit 210 receives keyword information from the device 100. The keyword information receiving unit 210 may also receive, from the device 100, a keyword selected by the device 100 along with keyword information regarding the selected keyword. The device 100 selects keywords from content displayed thereon based on a user input and collect keyword information regarding the selected keywords. The keyword information, which is information for explaining keywords, includes information such as dictionary information regarding keywords and/or information regarding characteristics of keywords. The keyword information may include texts and images. For example, when a keyword "TREE" is selected, the device 100 may collect information such as "a tall woody perennial plant that typically has one main stem or trunk and which, unlike a shrub, usually only beings to branch at some distance from the ground" and an image file of a tree. When a keyword "Tom" is selected from content, the device 100 may collect information indicating that Tom is a leading character with respect to the content as well as collect an image file of "Tom" as keyword information regarding the keyword "Tom".

The keyword information receiving unit 210 may receive an IDentification (ID) of the device 100 that provides the keyword information, an ID corresponding to a user of the device 100, a content name, and a name of an application that executes the content, along with the keyword information received from the device 100. The keyword information receiving unit 210 may also check a time at which the keyword information is received and store the checked time along with the keyword information. Time information may be stored as, for example, "December 24, 2011, 17:00".

The keyword information classification unit 220 classifies the keyword information and stores the classified keyword information. The keyword information classification unit 220 may classify the keyword information with respect to devices. More specifically, the keyword information classification unit 220 may classify the keyword information with respect to devices based on information regarding device IDs and/or information with respect to users of devices received with the keyword information, for example. The keyword information classification unit 220 may manage keywords received from a plurality of devices based on user IDs of devices. The keyword information classification unit 220 may classify the keyword information with respect to applications, with respect to applications based on application names received from devices, and/or with respect to content based on content names received simultaneously with the keyword information, for example.

The keyword request receiving unit 230 receives keyword information requests from the device 100. The keyword request receiving unit 230 may receive content from the device 100 in addition to a request for providing keyword information regarding the received content from the device 100. The keyword request receiving unit 230 receives at least one of an ID of the device 100, a user ID of the device 100, and a name of an application executed in the device 100.

The keyword extraction unit 240 extracts keywords from the content received from the device 100 according to a variety of methods, which may include any of the following examples, or a combination thereof. The keyword extraction unit 240 may determine keywords to be extracted from the received content based on keyword information stored in the DB 260, such as described in further detail herein. The keyword extraction unit 240 may extract keywords from the content using various types of natural language analysis technologies.

More specifically, the keyword extraction unit 240 may determine keywords to be extracted from the keyword information received from the device 100 based on the ID of the device 100. For example, in a case where keywords "a", "b", and "c" are received from the device 100 and are stored in the DB 260 with respect to content A, and the keyword extraction unit 240 receives a request for keyword information regarding the content A from the device 100, the keyword extraction unit 240 may extract the keywords "a", "b", and "c" from text included in the received content A.

The keyword extraction unit 240 may also determine keywords to be extracted from content based on the user ID of the device 100. The keyword extraction unit 240 may determine keywords to be extracted from keyword information received from another device of the user of the device 100. For example, the keywords "a", "b", and "c" may be received from a device A1 of a user AAA and stored in the DB 260 with respect to the content A, and keywords "d", "e", and "f" may be received from a device A2 of the user AAA and stored in the DB 260 with respect to the content A. In this case, if the keyword extraction unit 240 receives a keyword information request from the device A1, the keyword extraction unit 240 may extract the keywords "a", "b", "c", d", "e", and "f" received from the devices A1 and A2 of the user AAA from the content A.

The keyword extraction unit 240 may also extract keywords based on the application name received from the device 100, by checking an application that executes content based on the received application name and extract keywords stored in the DB 260 from the content with respect to the checked application.

The keyword extraction unit 240 may also extract keywords to be provided to the device 100 based on a time at which the keyword information received from the device 100 is stored. For example, the keyword extraction unit 240 may determine keywords to be extracted from keywords stored before a previously set time with respect to a time at which the keyword information request is received from the device 100. In this case, the keyword extraction unit 240 may determine keywords to be extracted from the content based on keyword information received from another device with respect to the checked application.

The keyword information providing unit 250 provides the device 100 with the keyword information corresponding to the extracted keywords. According to an embodiment of the present invention, the keyword information providing unit 250 allows inclusion of the keyword information corresponding to the extracted keywords in the received content and provides the device 100 with the content including the keyword information, but embodiments of the present invention are not limited thereto. For example, the keyword information providing unit 250 may allow inclusion of the keyword information in the received content using a hyperlink.

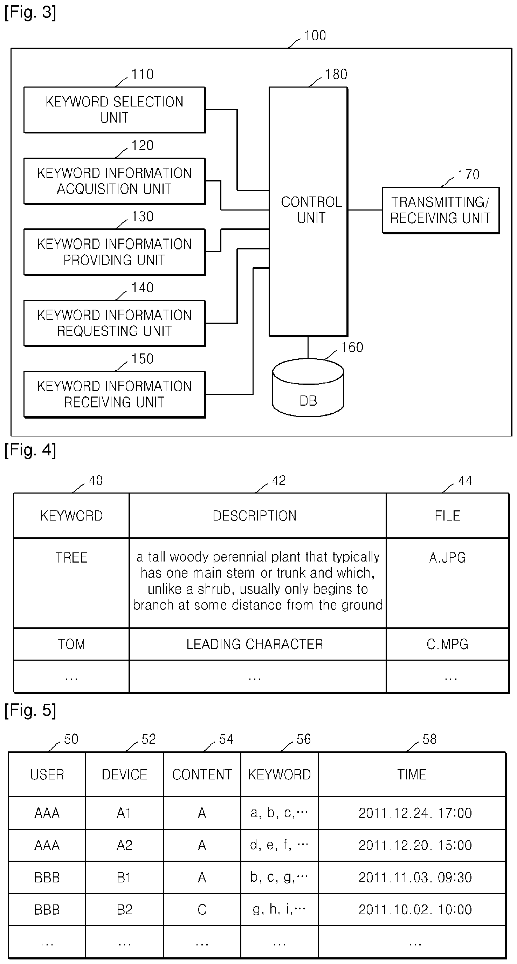

The DB 260 stores various types of information necessary for providing the devices 100 with the keyword information regarding the content. The DB 260 stores the keyword information received from the device 100 classified with respect to devices, users, and applications. The keyword information stored in the DB 260 is described in detail with reference to FIGs. 4 through 6.

The transmitting/receiving unit 270 transmits and receives various types of information necessary for providing the device 100 with the keyword information regarding the content to and from the device 100.

The control unit 280 controls a general operation of the server 200, collects the keyword information from the device 100, selects some of the collected keyword information, and controls the keyword information receiving unit 210, the keyword information classification unit 220, the keyword request receiving unit 230, the keyword extraction unit 240, the keyword information providing unit 250, the DB 260, and the transmitting/receiving unit 270 to provide the device 100 with the selected keyword information.

The device 100 according to an embodiment of the present invention is described as follows with reference to FIG. 3.

FIG. 3 is a detailed block diagram of a device according to an embodiment of the present invention.

Referring to FIG. 3, the device 100 according to the present embodiment includes a keyword selection unit 110, a keyword information acquisition unit 120, a keyword information providing unit 130, a keyword information requesting unit 140, a keyword information receiving unit 150, a DB 160, a transmitting/receiving unit 170, and a control unit 180.

The keyword selection unit 110 selects keywords from content. The keyword selection unit 110 may select predetermined keywords from text included in content based on user input, or may select predetermined words from English sentences included in an e-book based on the user input, for example.

The keyword information acquisition unit 120 acquires keyword information regarding the selected keywords. The keyword information acquisition unit 120 may acquire dictionary information and image information regarding the selected keywords. The keyword information acquisition unit 120 may acquire keyword information regarding the selected keywords from a search server (not shown), and/or from other sources. Further, for example, if predetermined words are selected from sentences included in an e-book, the keyword information acquisition unit 120 may acquire dictionary information and image information regarding the selected words.

The keyword information providing unit 130 provides the server 20 with the keyword information. The keyword information providing unit 130 provides the keywords and the keyword information regarding the keywords to the server 200. The keyword information providing unit 130 may also provide the server 200 with a device ID, a user ID, an application name corresponding to the keyword information, and/or a content name corresponding to the keyword information. For example, when a device A1 used by a user AAA selects keywords from content A executed in an application aa and acquires keyword information, the device 100 may provide the server 200 with a user ID "AAA", a device ID "A1", an application name "aa", and a content name "A" as well as the keyword information.

The keyword information provided to the server 200 is classified based on at least one of the device ID, the user ID, the application name corresponding to the keyword information, and the content name corresponding to the keyword information.

The keyword information requesting unit 140 requests the keyword information from the server 200. The keyword information requesting unit 140 may also provide the server 200 with content that is executing in the device 100 in addition to the device ID and/or the user ID.

The keyword information receiving unit 150 receives the keyword information regarding the content provided to the server 200, such as keyword information corresponding to keywords extracted from the content provided to the server 200 from the server 200. The keyword information receiving unit 150 may also receive content including keyword information from the server 200, such as content including keyword information using a hyperlink.

The DB 160 stores various types of information necessary for the device 100 to receive the keyword information regarding the content from the server 200. The DB 160 stores keywords selected in the device 100 and keyword information corresponding to the selected keywords.

The transmitting/receiving unit 170 transmits and receives various types of information necessary for the device 100 to receive the keyword information regarding the content from the server 200 to and from the device 100.

The control unit 180 controls a general operation of the device 100 and controls the keyword selection unit 110, the keyword information acquisition unit 120, the keyword information providing unit 130, the keyword information requesting unit 140, the keyword information receiving unit 150, the DB 160, and the transmitting/receiving unit 170 in such a way that the device 100 receives the keyword information regarding the content from the server 200.

Keyword information according to an embodiment of the present invention is described as follows with reference to FIG. 4.

FIG. 4 is a keyword information table according to an embodiment of the present invention.

Referring to FIG. 4, the keyword information table according to an embodiment of the present embodiment includes a keyword field 40, a description field 42, and a file field 44.

Keywords selected in the device 100 are recorded in the keyword field 40. Description information regarding keywords is recorded in the description field 42. For example, dictionary information regarding a keyword "TREE", such as "a tall woody perennial plant that typically has one main stem or trunk and which, unlike a shrub, usually only beings to branch at some distance from the ground" may be recorded in the corresponding area of the description field 42. If a keyword "Tom" 40c of a particular content is a leading character with respect to the content, character information regarding the keyword "Tom", such as "leading character" may be recorded in a corresponding area of the description field 42.

Names of files corresponding to keywords , such as names of image files and audio files corresponding to keywords, for example, are recorded in the file field 44. Image files may include images of keywords. Audio files may include audio explaining keywords.

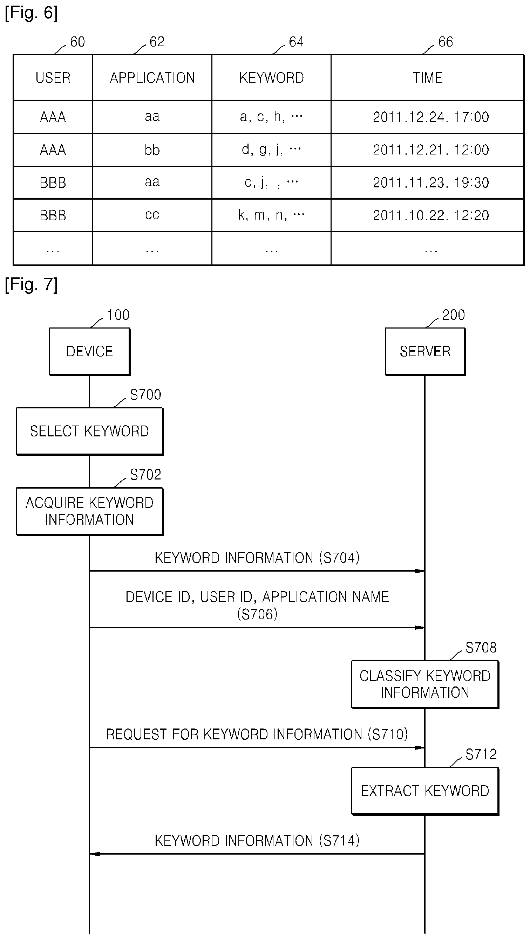

Keyword information that is classified and stored according to an embodiment of the present invention is described as follows with reference to FIGs. 5 and 6.

FIG. 5 is a table of keyword information classified and stored according to users and content according to an embodiment of the present invention.

Referring to FIG. 5, a keyword information table according to an embodiment of the present invention includes a user field 50, a device field 52, a content field 54, a keyword field 56, and a time field 58.

User IDs are recorded in the user field 50, device IDs are recorded in the device field 52, and content names are recorded in the content field 54. Keywords selected from content are recorded in the keyword field 56. Keywords corresponding to users, devices, and content may be recorded in the keyword field 56. For example, keywords "a", "b", and "c" selected from content A that is executed in a device A1 of a user AAA may be recorded in the keyword field 56.

Values of time at which keyword information is received from the device 100 or time at which the received keyword information is stored are recorded in the time field 58. For example, time information "December 24, 2011, 17:00" may be recorded in the time field 58.

FIG. 6 is a table of keyword information classified and stored with respect to users and applications according to an embodiment of the present invention.

Referring to FIG. 6, a keyword information table according to an embodiment of the present invention includes a user field 60, an application field 62, a keyword field 64, and a time field 66.

User IDs are recorded in the user field 60, application names are recorded in the application field 62, and keywords selected from applications are recorded in the keyword field 64. Keywords corresponding to users and applications are recorded in the keyword field 64. For example, keywords "a", "c", and "h" selected from an application aa of the user AAA are recorded in the keyword field 64.

Values indicating the time at which keyword information is received from the device 100 or time at which the received keyword information is stored are recorded in the time field 66. For example, time information "December 24, 2011, 17:00" corresponding to user "AAA" and application "aaa" are recorded in the time field 66.

Therefore, the server 200 according to the present embodiment may use the keyword information described above to determine keywords to be extracted from content based on at least one of devices, users, and applications.

A method of providing keyword information according to an embodiment of the present invention is described as follows with reference to FIG. 7.

FIG. 7 is a block flow diagram illustrating a method of providing keyword information, according to an embodiment of the present invention.

Referring to FIG. 7, in step S700, the device 100 selects keywords from content. For example, the device 100 may select keywords from text included in content based on a user input, or may select predetermined words from sentences included in, for example, an e-book based on the user input.

In step S702, the device 100 acquires keyword information regarding the selected keywords. For example, the device 100 may acquire dictionary information and image information regarding the selected keywords, or acquire keyword information regarding the selected keywords from a search server (not shown). Further, for example, if words are selected from sentences included in an e-book, the device 100 may acquire dictionary information and image information regarding the selected words.

In step S704, the device 100 provides the server 20 with the keyword information. The device 100 may provide the server 200 with the keywords as well as the keyword information regarding the keywords.

In step S706, the device 100 provides the server 200 with at least one of a device ID, a user ID, an application name corresponding to the keyword information, and a content name corresponding to the keyword information. For example, when a device A1 of a user AAA selects keywords from content A executed in an application aa and acquires keyword information, the device 100 provides the server 200 with at least one of a user ID "AAA", a device ID "A1", an application name "aa", and a content name "A".

In step S708, the server 200 classifies the keyword information received from the device 100. For example, the server 200 may classify and store the received keyword information with respect to devices based on device IDs, with respect to users of devices based on user IDs of devices, with respect to applications based on application names received from devices, and/or with respect to content based on content names.

In step S710, the device 100 requests the keyword information from the server 200. For example, the device 100 may provide the server 200 with content and request the server 200 to provide keyword information regarding the content and/or provide the server 200 with at least one of an ID corresponding to the content, a user ID, and/or a name of an application executing in the device 100.

In step S712, the server 200 extracts keywords from the content received from the device 100. For example, the server 200 may determine keywords to be extracted from content based on keyword information stored in the DB 260 with respect to the received content.

More specifically, the server may determine keywords to be extracted from the keyword information received from the device 100 based on the ID of the device 100. For example, when keywords "a", "b", and "c" are received from a device A1 and are stored in the DB 260 with respect to content A, and the keyword extraction unit 240 receives a request for keyword information regarding the content A from the device A1, the keyword extraction unit 240 may extract the keywords "a", "b", and "c" from text included in the received content A.

According to another example, in step S712, the server 200 also determines keywords to be extracted from content based on the user ID corresponding to the device 100. The server 200 determines keywords to be extracted from keyword information received from another device corresponding to the same user as the user of the device 100. For example, the keywords "a", "b", and "c" may be received from the device A1 of the user AAA and stored in the DB 260 with respect to the content A, and keywords "d", "e", and "f" may be received from a device A2 of the user AAA and stored in the DB 260 with respect to the content A. In this case, if the server 200 receives a keyword information request from the device A1, the keywords "a", "b", "c", d", "e", and "f" received from the devices A1 and A2 of the user AAA may be extracted from the content A.

According to yet another example, in step S712, the server 200 extracts keywords based on an application name received from the device 100. The server 200 checks an application that executes content based on the received application name and extract keywords stored in the DB 260 from the content with respect to the checked application. In this case, keywords to be extracted from content may be determined based on keyword information received from another device with respect to the checked application.

According to another example, in step S712, the server 200 extracts keywords to be provided to the device 100 based on a time at which the keyword information received from the device 100 is stored. The server 200 may determine keywords to be extracted from keywords stored before a previously set time with respect to a time at which the keyword information request is received from the device 100.

In step S714, the server 200 provides the device 100 with the keyword information corresponding to the extracted keywords. The server 200 may allow inclusion of the keyword information corresponding to the extracted keywords in the received content and provide the device 100 with the content including the keyword information but is not limited thereto. For example, the keyword information may be included in the received content through a hyperlink.

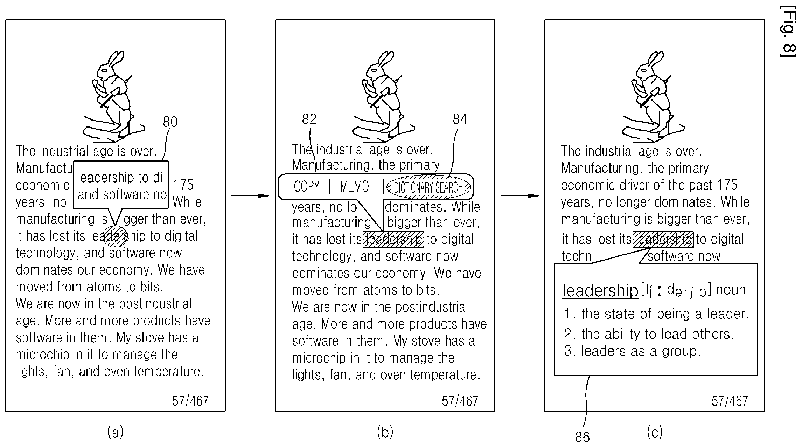

An example of the device 100 that selects a keyword and acquires keyword information regarding the selected keyword according to an embodiment of the present invention is described as follows with reference to FIGs. 8A through 8C.

FIGs. 8A through 8C illustrate the device 100 that selects a predetermined keyword 80 and acquires keyword information regarding the selected keyword according to an embodiment of the present invention. Referring to FIGs. 8A through 8C, when the keyword 80 is selected from content included in an e-book through a user input, a tray 82 for acquiring the keyword information regarding the selected keyword 80 is displayed on a screen. When a region 84 for a dictionary search is selected from the tray 82, the device 100 may acquire dictionary information 86 regarding the selected keyword 80 from a dictionary program installed in the device 100 or a dictionary search server (not shown). The device 100 may also display the acquired dictionary information on the screen. Thereafter, the device 100 provides the server 200 with the keyword 80 and the dictionary information 86.

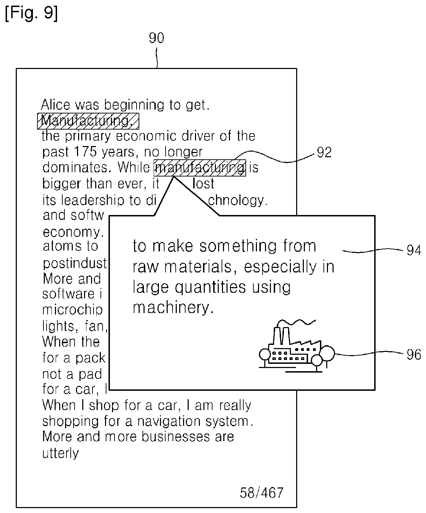

An example of the device 100 that displays keyword information received from a server according to an embodiment of the present invention is described as follows with reference to FIG. 9.

FIG. 9 illustrates a device that displays keyword information received from the server 200 according to an embodiment of the present invention.

Referring to FIG. 9, the device 100 may provide the server 200 with content that is executed by the device 100, and receive keyword information regarding keywords extracted from the provided content from the server 200. The device 100 may receive the keyword information separately or receive content including the keyword information. The keyword information received from the server 200 is displayed on a screen.

Keywords including keyword information may be differentiated within a text included in content. When a keyword 92 is selected from the content, keyword information regarding the selected keyword 92 is displayed on a screen. The keyword information includes dictionary information 94 and image information 96 regarding the keyword 92.

According to embodiments of the present invention, keywords received from a device are integrated and managed. Further, according to embodiments of the present invention, keyword information corresponding to content is provided after being classified with respect to categories such as devices, users, and applications.

Embodiments of the present invention may be embodied as a computer readable recording medium on which commands, such as a program module, which may be executed by a computer, are recorded. Such a computer readable medium may be any of media that may be accessed by a computer, such as a volatile medium, a non-volatile medium, a detachable medium, and a non-detachable medium. The computer readable medium may also be a computer storage medium or a communication medium. Examples of such a computer storage medium include a volatile medium, a non-volatile medium, a detachable medium, and a non-detachable medium that employ a method or technology for storing computer readable commands, data structures, program modules, or other data. In general, communication mediums according to embodiments of the present invention may store computer readable commands, data structures, program modules, data contained in a modulated data signal, and other transmission mechanisms. The communication medium may be any information transfer media.

While the present invention has been particularly shown and described with reference to certain embodiments thereof, it will be understood by those of ordinary skill in the art that various changes in form and details may be made therein without departing from the scope of the present invention as defined by the following claims.

## Claims

1. A server (200) for providing keyword information regarding content, wherein keyword information is information for explaining one or more keywords occurring in the content, the server (200) comprising:
a communication interface (270) arranged to receive (S704), from a device (100), one or more first keywords and first keyword information corresponding to the one or more first keywords, wherein the first keyword information is acquired by the device (100) by using the one or more first keywords;
a controller (280) arranged to:
classify (S708) the one or more first keywords and the first keyword information with respect to one or more categories;
receive (S710), from the device (100), a keyword information request including a content and information regarding a category for which keyword information is requested;
determine (S712) one or more second keywords from among the one or more first keywords based on the information regarding a category included in the keyword information request and a category obtained by classifying the one or more first keywords; and
provide (S714) the device (100) with second keyword information obtained based on the first keyword information and corresponding to those one or more second keywords which occur in the received content.

2. The server (200) of claim 1, wherein the controller (280) is arranged to classify the first keyword information based on at least one of devices, users, and applications corresponding to the one or more first keywords.

3. The server (200) of claim 1, wherein the controller (280) is arranged to determine the one or more second keywords based on the information regarding a category including a device Identification, ID, of the device (100).

4. The server (200) of claim 1, wherein the controller (280) is arranged to determine the one or more second keywords based on the information regarding a category including a user Identification, ID, corresponding to a user of the device (100).

5. The server (200) of claim 4, wherein the one or more second keywords are determined from among the one or more first keywords received from the device (100) of the user and from among keywords received from another device corresponding to the same user.

6. The server (200) of claim 5, wherein the controller (280) is arranged to determine the one or more second keywords based on the information regarding a category including an ID of an application that executes the received content in the device (100).

7. The server (200) of claim 1, wherein the one or more second keywords are determined from among the one or more first keywords received from the device and from among keywords received from another device with respect to the content.

8. The server (200) of claim 1, wherein the controller (280) is arranged to determine the one or more second keywords based on the information regarding a category including a time at which the first keyword information is stored.

9. The server (200) of claim 1, wherein the controller (280) is arranged to add the second keyword information to the received content, and provide the device (100) with the content including the added second keyword information.

10. The server (200) of claim 9, wherein the controller (280) is arranged to add the second keyword information to the received content by using a hyperlink corresponding to the second keyword information.

11. The server (200) of claim 1, wherein at least one of the first and second keyword information includes at least one of texts, images, and video.

12. A device (100) for displaying keyword information regarding content, wherein keyword information is information for explaining one or more keywords occurring in the content, the device (100) comprising:
a controller (180) arranged to:
select (S700) one or more first keywords from a content; and
acquire (S702) first keyword information corresponding to the one or more first keywords, wherein the first keyword information is acquired by the device (100) by using the one or more first keywords; and
a communication interface (170) arranged to:
provide (S704), to a server (200), the one or more keywords and the acquired first keyword information;
provide (S710), to the server (200), a keyword information request including a content and information regarding a category for which keyword information is requested; and
receive (S714), from the server (200), second keyword information corresponding to one or more second keywords determined, by the server (200), from among the one or more first keywords based on the information regarding a category included in the keyword information request and a category obtained through the server (200) classifying the one or more first keywords with respect to one or more categories,
wherein the second keyword information is obtained, by the server (200), based on the first keyword information and corresponds to those one or more second keywords which occur in the provided content.

13. A method of providing keyword information regarding content performed in a server (200), wherein keyword information is information for explaining one or more keywords occurring in the content, the method comprising:
receiving (S704), from a device (100), one or more first keywords and first keyword information corresponding to the one or more first keywords, wherein the first keyword information is acquired by the device (100) by using the one or more first keywords;
classifying (S708) the one or more first keywords and the first keyword information with respect to one or more categories;
receiving (S710), from the device (100) a keyword information request including a content and information regarding a category for which keyword information is requested; and
determining (S712) one or more second keywords from among the one or more first keywords based on the information regarding a category included in the keyword information request and a category obtained by classifying the one or more first keywords; and
providing (S714), to the device (100), second keyword information obtained based on the first keyword information and corresponding to those one or more second keywords which occur in the received content.

14. A method of receiving keyword information regarding content, wherein keyword information is information for explaining one or more keywords occurring in the content, the method comprising:
selecting (S700), by a device (100), one or more first keywords from a content;
acquiring (S702) first keyword information corresponding to the one or more first keywords, wherein the first keyword information is acquired by the device (100) by using the one or more first keywords;
providing (S704), to a server (200), the one or more keywords and the acquired first keyword information;
providing (S710), to the server (200), a keyword information request including a content and information regarding a category for which keyword information is requested; and
receiving (S714), from the server (200), second keyword information corresponding to one or more second keywords determined, by the server (200), from among the one or more first keywords based on the information regarding a category included in the keyword information request and a category obtained through the server (200) classifying the one or more first keywords with respect to one or more categories,
wherein the second keyword information is obtained, by the server (200), based on the first keyword information and corresponds to those one or more second keywords which occur in the provided content.

## Patentansprüche

1. Server (200) zur Bereitstellung von Stichwortinformationen bezüglich Inhalt, wobei Stichwortinformationen Informationen zum Erläutern eines oder mehrerer in dem dem Inhalt auftretender Stichwörter sind, wobei der Server (200) umfasst:
eine Kommunikationsschnittstelle (270), die angeordnet ist, um von einer Vorrichtung (100) eines oder mehrere erste Stichwörter und erste Stichwortinformationen, die dem einen oder den mehreren ersten Stichwörtern entsprechen, zu empfangen (S704), wobei die ersten Stichwortinformationen von der Vorrichtung (100) mithilfe des einen oder der mehreren ersten Stichwörter erworben werden;
eine Steuerung (280), die angeordnet ist, um:
das eine oder die mehreren ersten Stichwörter und die ersten Stichwortinformationen bezüglich einer oder mehrerer Kategorien zu klassifizieren (S708);
von der Vorrichtung (100) eine Stichwortinformationsanforderung, enthaltend einen Inhalt und Informationen hinsichtlich einer Kategorie zu empfangen (S710), für die Stichwortinformationen angefordert werden;
ein oder mehrere zweite Stichwörter unter dem einen oder den mehreren ersten Stichwörtern basierend auf den Informationen hinsichtlich einer Kategorie, die in der Stichwortinformationsanforderung enthalten ist, und einer Kategorie, die durch Klassifizieren des einen oder der mehreren ersten Stichwörter erhalten wird, zu bestimmen (S712);
und der Vorrichtung (100) zweite Stichwortinformationen bereitzustellen (S714), die basierend auf den ersten Stichwortinformationen erhalten werden und denjenigen einem oder den mehreren zweiten Stichwörtern entsprechen, die in dem empfangenen Inhalt auftreten.

2. Server (200) nach Anspruch 1, wobei die Steuerung (280) angeordnet ist, um die ersten Stichwortinformationen basierend auf mindestens eines von Vorrichtungen, Nutzern und Anwendungen entsprechend dem einen oder den mehreren ersten Stichwörtern zu klassifizieren.

3. Server (200) nach Anspruch 1, wobei die Steuerung (280) angeordnet ist, um das eine oder die mehreren zweiten Stichwörter basierend auf den Informationen hinsichtlich einer Kategorie, die eine Vorrichtungsidentifikation, ID, der Vorrichtung (100) enthält, zu bestimmen.

4. Server (200) nach Anspruch 1, wobei die Steuerung (280) angeordnet ist, um das eine oder die mehreren zweiten Stichwörter basierend auf den Informationen hinsichtlich einer Kategorie, die eine Nutzeridentifikation, ID, entsprechend einem Nutzer der Vorrichtung (100) enthält, zu bestimmen.

5. Server (200) nach Anspruch 4, wobei das eine oder die mehreren zweiten Stichwörter unter dem einen oder den mehreren ersten Stichwörtern, die von der Vorrichtung (100) des Nutzers empfangen werden, und unter Stichwörtern, die von einer anderen, demselben Nutzer entsprechenden Vorrichtung empfangen werden, bestimmt werden.

6. Server (200) nach Anspruch 5, wobei die Steuerung (280) angeordnet ist, um das eine oder die mehreren zweiten Stichwörter basierend auf den Informationen hinsichtlich einer Kategorie, die eine Nutzeridentifikation, ID, einer Anwendung enthält, die den empfangenen Inhalt in der Vorrichtung (100) ausführt, zu bestimmen.

7. Server (200) nach Anspruch 1, wobei das eine oder die mehreren zweiten Stichwörter unter dem einen oder den mehreren ersten Stichwörtern, die von der Vorrichtung empfangen werden, und unter Stichwörtern, die von einer anderen Vorrichtung bezüglich des Inhalts empfangen werden, bestimmt werden.

8. Server (200) nach Anspruch 1, wobei die Steuerung (280) angeordnet ist, um das eine oder die mehreren zweiten Stichwörter basierend auf den Informationen hinsichtlich einer Kategorie, die eine Zeit enthält, zu der die ersten Stichwortinformationen gespeichert werden, zu bestimmen.

9. Server (200) nach Anspruch 1, wobei die Steuerung (280) angeordnet ist, um die zweiten Stichwortinformationen dem empfangenen Inhalt hinzuzufügen und der Vorrichtung (100) den Inhalt, der die hinzugefügten zweiten Stichwortinformationen enthält, bereitzustellen.

10. Server (200) nach Anspruch 9, wobei die Steuerung (280) angeordnet ist, um die zweiten Stichwortinformationen dem empfangenen Inhalt durch Verwendung eines den zweiten Stichwortinformationen entsprechenden Hyperlinks hinzuzufügen.

11. Server (200) nach Anspruch 1, wobei mindestens eines der ersten und zweiten Stichwortinformationen mindestens eines aus Texten, Bildern und Video enthält.

12. Vorrichtung (100) zum Anzeigen von Stichwortinformationen hinsichtlich Inhalt, wobei Stichwortinformationen Informationen zum Erläutern eines oder mehrerer in dem Inhalt auftretender Stichwörter sind, wobei die Vorrichtung (100) umfasst:
eine Steuerung (180), die angeordnet ist, um:
eines oder mehrere erste Stichwörter aus einem Inhalt auszuwählen (S700);
und erste Stichwortinformationen, die dem einen oder den mehreren ersten Stichwörtern entsprechen, zu erwerben (S702), wobei die ersten Stichwortinformationen von der Vorrichtung (100) mithilfe des einen oder der mehreren ersten Stichwörter erworben werden;
und eine Kommunikationsschnittstelle (170), die angeordnet ist, um:
einem Server (200) das eine oder die mehreren Stichwörter und die erworbenen ersten Stichwortinformationen bereitzustellen (S704);
dem Server (200) eine Stichwortinformationsanforderung, enthaltend einen Inhalt und Informationen hinsichtlich einer Kategorie für die Stichwortinformationen angefordert werden, bereitzustellen (S710);
und vom Server (200) zweite Stichwortinformationen zu empfangen (S714), die einem oder mehreren zweiten Stichwörtern entsprechen, die vom Server (200) unter dem einen oder den mehreren ersten Stichwörtern basierend auf den Informationen hinsichtlich einer Kategorie, die in der Stichwortinformationsanforderung enthalten ist, und einer Kategorie, die durch den Server (200), der das eine oder die mehreren ersten Stichwörter bezüglich einer oder mehrerer Kategorien klassifiziert, erhalten wird, bestimmt werden, wobei die zweiten Stichwortinformationen vom Server (200) basierend auf den ersten Stichwortinformationen erhalten werden und dem einen oder den mehreren zweiten Stichwörtern entsprechen, die im bereitgestellten Inhalt auftreten.

13. Verfahren zur Bereitstellung von Stichwortinformationen hinsichtlich eines in einem Server (200) ausgeführten Inhalts, wobei Stichwortinformationen Informationen zum Erläutern eines oder mehrerer in dem dem Inhalt auftretender Stichwörter sind, wobei das Verfahren umfasst:
Empfangen (S704) von einer Vorrichtung (100) eines oder mehrere erste Stichwörter und erste Stichwortinformationen, die dem einen oder den mehreren ersten Stichwörtern entsprechen, wobei die ersten Stichwortinformationen von der Vorrichtung (100) mithilfe des einen oder der mehreren ersten Stichwörter erworben werden;
Klassifizieren (S708) des einen oder der mehreren ersten Stichwörter und der ersten Stichwortinformationen bezüglich einer oder mehrerer Kategorien;
Empfangen (S710) von der Vorrichtung (100) einer Stichwortinformationsanforderung, enthaltend einen Inhalt und Informationen hinsichtlich einer Kategorie, für die Stichwortinformationen angefordert werden;
und Bestimmen (S712) eines oder mehrerer zweiter Stichwörter unter dem einen oder den mehreren ersten Stichwörtern basierend auf den Informationen hinsichtlich einer Kategorie, die in der Stichwortinformationsanforderung enthalten ist, und einer Kategorie, die durch Klassifizieren der einen oder der mehreren ersten Stichwörter erhalten wurde;
und Bereitstellen (S714), an die Vorrichtung (100), zweiter Stichwortinformationen, die basierend auf den ersten Stichwortinformationen erhalten werden und dem einem oder den mehreren zweiten Stichwörtern entsprechen, die in dem empfangenen Inhalt auftreten.

14. Verfahren zum Empfangen von Stichwortinformationen hinsichtlich eines Inhalts, wobei Stichwortinformationen Informationen zum Erläutern eines oder mehrerer in dem Inhalt auftretender Stichwörter sind, wobei das Verfahren umfasst:
Auswählen (S700), durch eine Vorrichtung (100), eines oder mehrerer erster Stichwörter aus einem Inhalt;
Erwerben (S702) erster Stichwortinformationen, die dem einen oder den mehreren ersten Stichwörtern entsprechen, wobei die ersten Stichwortinformationen von der Vorrichtung (100) mithilfe des einen oder der mehreren ersten Stichwörter erworben werden;
Bereitstellen (S704) an einen Server (200) des einen oder der mehreren Stichwörter und der erworbenen ersten Stichwortinformationen;
Bereitstellen (S710) an den Server (200) einer Stichwortinformationsanforderung, enthaltend einen Inhalt und Informationen hinsichtlich einer Kategorie für die Stichwortinformationen angefordert werden;
und Empfangen (S714) vom Server (200) zweiter Stichwortinformationen, die einem oder mehreren zweiten Stichwörtern entsprechen, die vom Server (200) unter dem einen oder den mehreren ersten Stichwörtern basierend auf den Informationen hinsichtlich einer Kategorie, die in der Stichwortinformationsanforderung enthalten ist, und einer Kategorie, die durch den Server (200), der das eine oder die mehreren ersten Stichwörter bezüglich einer oder mehrerer Kategorien klassifiziert, erhalten wird, bestimmt werden, wobei die zweiten Stichwortinformationen vom Server (200) basierend auf den ersten Stichwortinformationen erhalten werden und denjenigen einen oder den mehreren zweiten Stichwörtern entsprechen, die im bereitgestellten Inhalt auftreten.

## Revendications

1. Serveur (200) destiné à délivrer des informations de mots clés concernant un contenu, dans lequel des informations de mots clés sont des informations destinées à expliquer un ou plus mots clés survenant dans le contenu, le serveur (200) comprenant :
une interface de communication (270) conçue pour recevoir (S704), depuis un dispositif (100), un ou plus premiers mots clés et des premières informations de mots clés correspondant à l'un ou plus premiers mots clés, dans lequel les premières informations de mots clés sont acquises par le dispositif (100) en utilisant l'un ou plus premiers mots clés ;
une unité de commande (280), conçue pour :
classifier (S708) l'un ou plus premiers mots clés et les premières informations de mots de clés selon une ou plus catégories ;
recevoir (S710), depuis le dispositif (100), une requête d'informations de mots clés incluant un contenu et des informations concernant une catégorie pour laquelle des informations de mots clés sont requises ;
déterminer (S712) un ou plus deuxièmes mots clés parmi l'un ou plus premiers mots clés sur la base des informations concernant une catégorie incluse dans la requête d'informations de mots de clés et d'une catégorie obtenue en classifiant l'un ou plus premiers mots clés ;
et délivrer (S714) au dispositif (100) des deuxièmes informations de mots clés obtenues sur la base des premières informations de mots clés et correspondant à ceux de l'un ou plus deuxièmes mots clés qui surviennent dans le contenu reçu.

2. Serveur (200) selon la revendication 1, dans lequel l'unité de commande (280) est conçue pour classifier les premières informations de mots clés sur la base d'au moins l'un de dispositifs, utilisateurs et applications correspondant à l'un ou plus premiers mots clés.

3. Serveur (200) selon la revendication 1, dans lequel l'unité de commande (280) est conçue pour déterminer l'un ou plus deuxièmes mots clés sur la base des informations concernant une catégorie incluant un identifiant, ID, de dispositif du dispositif (100).

4. Serveur (200) selon la revendication 1, dans lequel l'unité de commande (280) est conçue pour déterminer l'un ou plus deuxièmes mots clés sur la base des informations concernant une catégorie incluant un identifiant, ID, d'utilisateur correspondant à un utilisateur du dispositif (100).

5. Serveur (200) selon la revendication 4, dans lequel l'un ou plus deuxièmes mots clés sont déterminés à partir de l'un ou plus premiers mots clés reçus depuis le dispositif (100) de l'utilisateur et à partir de mots clés reçus depuis un autre dispositif correspondant au même utilisateur.

6. Serveur (200) selon la revendication 5, dans lequel l'unité de commande (280) est conçue pour déterminer l'un ou plus deuxièmes mots clés sur la base des informations concernant une catégorie incluant un ID d'une application qui exécute le contenu reçu dans le dispositif (100).

7. Serveur (200) selon la revendication 1, dans lequel l'un ou plus deuxièmes mots clés sont déterminés à partir de l'un ou plus premiers mots clés reçus depuis le dispositif et à partir de mots clés reçus depuis un autre dispositif par rapport au contenu.

8. Serveur (200) selon la revendication 1, dans lequel l'unité de commande (280) est conçue pour déterminer l'un ou plus deuxièmes mots clés sur la base des informations concernant une catégorie incluant un temps auquel les premières informations de mots clés sont stockées.

9. Serveur (200) selon la revendication 1, dans lequel l'unité de commande (280) est conçue pour ajouter les deuxièmes informations de mots clés au contenu reçu, et délivrer au dispositif (100) le contenu incluant les deuxièmes informations de mots clés ajoutées.

10. Serveur (200) selon la revendication 9, dans lequel l'unité de commande (280) est conçue pour ajouter les deuxièmes informations de mots clés au contenu reçu en utilisant un hyperlien correspondant aux deuxièmes informations de mots clés.

11. Serveur (200) selon la revendication 1, dans lequel au moins l'une des premières et deuxièmes informations de mots clés inclut au moins l'un parmi des textes, images et vidéo.

12. Dispositif (100) destiné à afficher des informations de mots clés concernant un contenu, dans lequel des informations de mots clés sont des informations destinées à expliquer un ou plus mots clés survenant dans le contenu, le dispositif (100) comprenant :
une unité de commande (180), conçue pour :
sélectionner (S700) un ou plus premiers mots clés depuis un contenu ;
et acquérir (S702) des premières informations de mots clés correspondant à l'un ou plus premiers mots clés, dans lequel les premières informations de mots clés sont acquises par le dispositif (100) en utilisant l'un ou plus premiers mots clés ;
et une interface de communication (170) conçue pour :
délivrer (S704), à un serveur (200), l'un ou plus mots clés et les premières informations de mots clés acquises ;
délivrer (S710), au serveur (200), une requête d'informations de mots clés incluant un contenu et des informations concernant une catégorie pour laquelle des informations de mots clés sont requises ;
et recevoir (S714), depuis le serveur (200), des deuxièmes informations de mots clés correspondant à l'un ou plus deuxièmes mots clés déterminés, par le serveur (200), parmi l'un ou plus premiers mots clés sur la base des informations concernant une catégorie incluse dans la requête d'informations de mots de clés et d'une catégorie obtenue par le biais du serveur (200) en classifiant l'un ou plus premiers mots clés selon une ou plus catégories, dans lequel les deuxièmes informations de mots clés sont obtenues, par le serveur (200), sur la base des premières informations de mots clés et correspondent à ceux de l'un ou plus deuxièmes mots clés qui surviennent dans le contenu fourni.

13. Procédé de délivrance d'informations de mots clés concernant un contenu exécuté dans un serveur (200), dans lequel des informations de mots clés sont des informations destinées à expliquer un ou plus mots clés survenant dans le contenu, le procédé comprenant :
la réception (S704), depuis un dispositif (100), d'un ou plus premiers mots clés et de premières informations de mots clés correspondant à l'un ou plus premiers mots clés, dans lequel les premières informations de mots clés sont acquises par le dispositif (100) en utilisant l'un ou plus premiers mots clés ;
la classification (S708) de l'un ou plus premiers mots clés et des premières informations de mots de clés selon une ou plus catégories ;
la réception (S710), depuis le dispositif (100), d'une requête d'informations de mots clés incluant un contenu et des informations concernant une catégorie pour laquelle des informations de mots clés sont requises ;
et la détermination (S712) d'un ou plus deuxièmes mots clés parmi l'un ou plus premiers mots clés sur la base des informations concernant une catégorie incluse dans la requête d'informations de mots de clés et d'une catégorie obtenue en classifiant l'un ou plus premiers mots clés ;
et la délivrance (S714), au dispositif (100), de deuxièmes informations de mots clés obtenues sur la base des premières informations de mots clés et correspondant à ceux de l'un ou plus deuxièmes mots clés qui surviennent dans le contenu reçu.

14. Procédé de réception d'informations de mots clés concernant un contenu, dans lequel des informations de mots clés sont des informations destinées à expliquer un ou plus mots clés survenant dans le contenu, le procédé comprenant :
la sélection (S700), par un dispositif (100), d'un ou plus premiers mots clés depuis un contenu ;
l'acquisition (S702) de premières informations de mots clés correspondant à l'un ou plus premiers mots clés, dans lequel les premières informations de mots clés sont acquises par le dispositif (100) en utilisant l'un ou plus premiers mots clés ;
la délivrance (S704), à un serveur (200), de l'un ou plus mots clés et des premières informations de mots clés acquises ;
la délivrance (S710), au serveur (200), d'une requête d'informations de mots clés incluant un contenu et des informations concernant une catégorie pour laquelle des informations de mots clés sont requises ;
et la réception (S714), depuis le serveur (200), de deuxièmes informations de mots clés correspondant à l'un ou plus deuxièmes mots clés déterminés, par le serveur (200), parmi l'un ou plus premiers mots clés sur la base des informations concernant une catégorie incluses dans la requête d'informations de mots de clés et d'une catégorie obtenue par le biais du serveur (200) en classifiant l'un ou plus premiers mots clés selon une ou plus catégories, dans lequel les deuxièmes informations de mots clés sont obtenues, par le serveur (200), sur la base des premières informations de mots clés et correspondent à ceux de l'un ou plus deuxièmes mots clés qui surviennent dans le contenu fourni.
